# EUROPÄISCHE PATENTANMELDUNG

(11) **EP 4 193 842 A1**
(43) Veröffentlichungstag der Anmeldung: **14.06.2023**
(21) Anmeldenummer: 22210979.5
(22) Anmeldetag: 02.12.2022
(51) Int. Cl.: A23C 1/04, A23C 9/142, A23C 9/152, A23C 9/16, A23C 11/10, A23L 2/10, A23L 2/38, A23C 11/06, A23L 7/10, A23L 25/00, A23J 3/34, A23L 19/00

(54) **ZUSAMMENSETZUNG ZUR HERSTELLUNG EINES GETRÄNKS AUF HAFERBASIS**

(30) Priorität: 10.12.2021 LU 102890
(71) Anmelder: Gott, Valérie, 12163 Berlin (DE); Binder, Benjamin, 12163 Berlin (DE)
(72) Erfinder: Gott, Valérie, 12163 Berlin (DE); Binder, Benjamin, 12163 Berlin (DE)
(74) Vertreter: Tegethoff, Sebastian

(57) **Zusammenfassung**

Die Erfindung betrifft ein Herstellungsverfahren für ein wasserlösliches Trockenpulver auf pflanzlicher Basis und stellt ein Herstellungsverfahren dafür zur Verfügung, umfassend die Schritte; Herstellen einer ersten Mischung durch Mischen von Wasser mit Hafer; Zerkleinerung fester Bestandteile in der ersten Mischung; Erhitzen der ersten Mischung auf ein Temperaturbereich zwischen 60° - 70°C; Zugabe von *α*- und/oder *β*-Amylasen und Inkubation für mindestens 40 min bei 60° - 70°C; Filtrieren der ersten Mischung; Zusetzen von flüssigem Fett oder Öl zu der ersten Mischung in einem Verhältnis von 65 Gew.-% der ersten Mischung und 35 Gew.-% flüssiges Fett oder Öl; und Sprühtrocknung der Mischung aus erster Mischung und Fett oder Öl.

## Beschreibung

### GEBIET DER ERFINDUNG

Die Erfindung betrifft eine Zusammensetzung zur Herstellung eines Hafermilch Erzeugnisses.

### HINTERGRUND DER ERFINDUNG

Im Zuge einer Ernährung mit Lebensmitteln auf pflanzlicher Basis wird Kuhmilch durch Getränke ersetzt, die neben Wasser pflanzliche Auszüge enthalten. Dabei werden zumeist Sojabohnen oder Haferflocken als pflanzliche Bestandteile verwendet. Getränke auf Basis von Haferflocken werden dann auch als "Hafermilch" bezeichnet, wobei es sich streng genommen dabei nicht um "Milch" handelt, da diese Bezeichnung Tiermilchsorten vorbehalten ist. Im Handel wird eine Getreidemilch aus Hafer daher oft als "Haferdrink" bezeichnet.

Aus dem Stand der Technik sind Vorrichtungen zur Herstellung eines Hafermilch bekannt. So beschreibt die DE 20 2012 103 875 U1 ein Hafermilch-Erzeugungsgerät, welches eine Breikocheinheit und eine Pulpeneinheit, die auf einer tieferen Ebene als die Breikocheinheit angeordnet ist, umfasst.

Die veröffentlichte deutsche Patentanmeldung DE 10 2019 206 094 A1 betrifft einen Sojamilchbereiter, der einen Filter zur Aufnahme von Sojabohnen, einen Antrieb, ein Zerkleinerungswerkzeug und einen Krug aufweist. Der Filter ist im Krug angeordnet und ermöglicht das Einführen des Zerkleinerungswerkzeugs in den Filter. Der Antrieb treibt in einem ersten Schritt das Zerkleinerungswerkzeug an, wobei die Sojabohnen mit dem Zerkleinerungswerkzeug im Filter zerkleinert werden, um aus den Sojabohnen Sojamilch und Restmaterial zu erzeugen. In einem zweiten Schritt rotiert der Antrieb den Filter. Der Filter wird nach der Zerkleinerung der Sojabohnen rotiert, um die flüssige Sojamilch durch Zentrifugalkraft von dem verbleibenden Restmaterial zu trennen.

Das chinesische Patent mit dem Aktenzeichen CN 106 721 789 B betrifft ein Hafer-Linolensäure-Kompositgetränk sowie ein Verfahren zur Herstellung des Getränks. Das Hafer-Linolensäure-Mischgetränk wird hauptsächlich aus den folgenden Rohstoffen in Massenprozent hergestellt: 1-6% Hafer, 1-8% Leinöl, 2-3% Maltose, 0,2-0. 6 % Fructo-Oligosaccharid, 1 - 3 % Xylit, 1 - 4 % Rohrzucker oder Stärkesirup, 2 - 6 % Kokosmilch, 0,1 - 0,3 % eines zusammengesetzten Emulsionsstabilisators, 0,005 - 0,01 % Speiseessenz und 0,1 - 1 % Natriumascorbat. Bei dem Hafer-Linolensäure-Kompositgetränk gemäß der CN 106 721 789 B wird der Hafer als Hauptrohstoff verwendet, das Leinöl und die Kokosmilch werden hinzugefügt, der spezifische Komposit-Emulsionsstabilisator wird abgestimmt, und eine spezifische Technologie wird verwendet, so dass das Hafer-Linolensäure-Kompositgetränk hergestellt wird. Der hohe Gehalt an Omega-3-Fettsäuren in dem Hafergetränk ist gewährleistet, und außerdem kann eine gute Stabilisierungswirkung erzielt werden. Bei normaler Temperatur bildet das Hafer-Linolensäure-Kompositgetränk nach 3-monatiger Standzeit keine Ausfällungen und ist frei von einem Schichtungsphänomen und dem Phänomen, dass Fett nach oben schwimmt. Es wird als nachteilig im Sinne der vorliegenden Erfindung angesehen, dass das Getränk gemäß der CN 106 721 789 B eine Vielzahl an Zutaten enthält und unter anderem Emulsionsstabilisatoren erforderlich sind.

Aus dem Stand der Technik ist ein unter der Bezeichnung "Oatly" vertriebenes Getränk bekannt. Dabei handelt es sich um ein Hafermilchgetränk, dem Fett zugesetzt wurde. Nachteilig an diesem Getränk ist, dass Dikaliumhydrogenphosphat zur Homogenisierung der Vielzahl an Inhaltsstoffen zugesetzt wird.

Weiterhin ist ein unter der Bezeichnung "Preco Avena" vertriebenes Getränkepulver mit Vanillegeschmack bekannt. Hierbei handelt es sich um ein Pulver, welches in Kuhmilch eingerührt werden kann, um diese mit Vanillegeschmack zu versehen. Nachteilig an diesem Produkt ist, dass es mit klassischer Vollmilch verwendet wird und somit kein veganes Endprodukt entsteht.

Unter der Bezeichnung "Natural Gristmill" wird ein Getränkepulver vertrieben, welches neben Hafer pulverisiertes Rapsöl verwendet. Zur Herstellung des Getränkepulvers werden verschiedene Pulver gemischt. Weiterhin sind Inhaltsstoffe zur leichteren Löslichkeit vorhanden und es ist als nachteilig anzusehen, dass das Getränkepulver nicht aus einem homogenen, gut löslichen Pulver besteht, welches lediglich auf Basis von Hafer und Fetten Ölen besteht, welche in einem Pulver untrennbar verbunden sind.

Das Chinesische patent mit dem Aktenzeichen CN 104 855 790 B offenbart einen Haferelektrolat und ein Herstellungsverfahren. Dieses Dokument bezieht sich auf ein Haferelektrolat, der nicht mit heißem Wasser angerührt wird, direkt verzehrt werden kann, mit Fruchtsaft und Gemüsesaft kombiniert werden kann, einen hohen Nährwert und einen guten Geschmack aufweist und vom menschlichen Körper leicht aufgenommen werden kann, sowie ein entsprechendes Herstellungsverfahren. Die Haferflockenmilch besteht aus folgenden Rohstoffen (in Gewichtsteilen): 70-90 Teile Haferbrei, 1-3 Teile Sojaisolatproteine, 5-20 Teile Maltodextrin, 0,1-0,3 Teile wasserfreies Dikaliumhydrogenphosphat, 0,05-0,2 Teile Saccharoseester, 0,1-0,4 Teile Monostearin und 5-10 Teile natürliches Pflanzenöl. Der Haferelektrolat kann sofort gegessen werden, ist reich an Nährstoffen und gut verdaulich, und darüber hinaus wird der Haferelektrolat als neuartiger Lebensmittelrohstoff in Lebensmitteln wie festen Getränken und dergleichen verwendet. Nachteilig an dem Produkt sind die Vielzahl an Inhaltsstoffen sowie die Verwendung des Emulgators Dikaliumhydrogenphosphat. Weiterhin resultiert aus dem aufwändigen Herstellungsverfahren mit einer Vielzahl von Schritten unter Einsatz von Enzymen und einer Sprühtrocknung bei hohen Temperaturen ein Granulat und kein Pulver.

Die pflanzlichen Getränke zum Ersatz von Kuhmilch bestehen zu einem überwiegenden Anteil aus Wasser. Beim Transport der Getränke wird somit hauptsächlich Wasser transportiert, was als nachteilig im Sinne der Nachhaltigkeit angesehen werden kann, da Wasser zumindest in Europa überall vor Ort in hervorragender Qualität vorhanden ist.

Aus dem oben zitierten Stand der Technik ergibt sich, dass bekannte Getränke oder Pulver zumeist eine Vielzahl an Inhaltsstoffen aufweisen, unter anderem Dikaliumhydrogenphosphat zur Homogenisierung der gelösten Inhaltsstoffe.

Es besteht somit Bedarf an einer Zusammensetzung, aus der sich allein durch den Zusatz von Wasser ein pflanzliches Getränk herstellen lässt.

### KURZE BESCHREIBUNG DER ERFINDUNG

Die erfindungsgemäße Aufgabe wird durch die Merkmale der unabhängigen Ansprüche gelöst. Weitere Ausführungsformen sind in den abhängigen Ansprüchen angegeben.

Die vorliegende Erfindung stellt ein Herstellungsverfahren für ein wasserlösliches Trockenpulver zur Verfügung, umfassend die Schritte;
a. Herstellen einer ersten Mischung durch Mischen von Wasser mit Hafer in einem Verhältnis von 50 - 65 Gew-% Wasser mit 35 - 50 Gew.-% Hafer zu dann 100 Gew.-% der ersten Mischung;
b. Zerkleinern fester Bestandteile in der ersten Mischung;
c. Erhitzen der ersten Mischung auf ein Temperaturbereich zwischen 60° - 70°C;
d. Zugabe von *α*- und/oder *β*-Amylasen und Inkubation für mindestens 40 min bei 60° - 70°C;
e. Filtrieren der ersten Mischung;
f. Zusetzen von flüssigem Fett oder Öl zu der ersten Mischung in einem Verhältnis von 65 Gew.-% der ersten Mischung und 35 Gew.-% flüssiges Fett oder Öl zum Erhalt von 100 Gew.-% einer zweiten Mischung; und
g. Sprühtrocknung der zweiten Mischung zum Erhalt eines homogenen Pulvers.

Für die Sprühtrocknung kann in einer Ausführungsform vorgesehen sein, dass diese in einem Temperaturbereich von 65°C bis 68°C erfolgt

Es ist erfindungsgemäß vorgesehen, dass die Sprühtrocknung bei 67,5°C erfolgt.

In einer weiteren Ausführungsform des erfindungsgemäßen erfolgt die Sprühtrocknung in einem Sprühturm.

Weiterhin kann vorgesehen sein, dass das Pulver nach der Sprühtrocknung mit Lecithin übersprüht wird.

In einem weiteren Aspekt der Erfindung ist es möglich, dass vor der Sprühtrocknung Phosphate zugesetzt werden.

Das erfindungsgemäße Verfahren kann weiterhin den Schritt umfassen vor der Sprühtrocknung Vitaminen zuzusetzen.

Ein weiterer Gegenstand der vorliegenden Erfindung betrifft die Verwendung eines Trockenpulvers, welches - wie zuvor beschrieben - hergestellt wurde zur Herstellung eines Getränks umfassend den Schritt des Mischens des Trockenpulvers mit Wasser.

Die Verwendung umfasst die Mischung in einem Verhältnis von 1:10, sodass je 10 g Trockenpulver mit 100 ml Wasser gemischt werden.

Weiterhin betrifft die Erfindung ein Getränk auf pflanzlicher Basis mit einem Fettgehalt von 3 - 4 Gew.-%, hergestellt durch die Mischung eines Trockenpulvers aus einem Verfahren wie zuvor beschrieben mit Wasser.

### KURZE BESCHREIBUNG DER FIGUREN

Die Erfindung wird im Folgenden anhand von Figuren näher dargestellt. Dabei ist für den Fachmann offensichtlich, dass es sich nur um eine mögliche Ausführungsform handelt, ohne dass die Erfindung auf die gezeigten Ausführungsformen beschränkt ist. Es zeigt:
FIG. 1 schematisch den Ablauf zur Herstellung eines Trockenpulvers
FIG. 2 zeigt Vergleichsergebnisse von Versuchen zur Löslichkeit von Getränkepulvern.
FIG. 3 zeigt Vergleichsergebnisse von Versuchen zur Schäumbarkeit von Lösungen von Getränkepulvern.

### AUSFÜHRLICHE BESCHREIBUNG DER ERFINDUNG

Die vorliegende Erfindung stellt ein schnell auflösbares, fetthaltiges, gut schäumbares und rein pflanzenbasiertes Milchsurrogat sowie ein Verfahren zu seiner Herstellung zur Verfügung.

Unter Hafer im Sinne der vorliegenden Erfindung werden Haferflocken, das Vollkorn oder auch geschroteter Hafer verstanden.

Das Milchsurrogat gemäß der vorliegenden Erfindung liegt als homogenes Pulver vor, welches durch Sprühtrocknung erhalten wurde. Es kann als besonders vorteilhaft an dem Pulver zur Herstellung eines Pflanzengetränks durch Zugabe von Wasser angesehen werden, dass das homogene Pulver Fett enthält, welches von den anderen Bestandteilen nicht zu trennen ist. Das gelöste Pulver kann einerseits als Energielieferant dienen und ist weiterhin als Geschmacksträger von Bedeutung. Tierische Milch ist eine Emulgatoren enthaltende Emulsion aus Fett und Wasser. Daher ist es wünschenswert, dass eine pflanzliche Milch, welche als Ersatz der tierischen Milch dient, ebenfalls Fett enthält, wobei vorzugsweise auf weitere Inhaltsstoffe verzichtet werden soll.

Weiterhin ist es von Bedeutung, dass sich das Pulver leicht und schnell in Wasser löst, damit als Produkt eine pflanzliches Getränkt entsteht, welches auch im Hinblick auf eine vollwertige Ernährung einer tierischen Milch entspricht.

Alle Prozentangaben in der vorliegenden Offenbarung beziehen sich auf die Masse und sind damit als Gewichtsprozent zu verstehen.

Das Trockenpulver gemäß der vorliegenden Erfindung wird durch ein Verfahren umfassend die folgenden Schritte erhalten: Zu Beginn wird Hafer mit Wasser gemischt. Dazu werden Haferflocken, Hafer-Vollkorn und/oder geschroteter Hafer in Wasser eingeweicht. Die festen Bestandteile dieser Mischung werden dann zerkleinert. Die Mischung wird auf einen Temperaturbereich zwischen 60°C bis 70°C erhitzt und es werden dann *α*- und/oder *β*-Amylasen zugegeben. Die Mischung wird für mindestens 40 min für die enzymatische Reaktion stehengelassen und anschließend filtriert, um die Feststoffe aus der Mischung zu entfernen. Für den Vorgang des Filterns wird die Siebgröße derart gewählt, dass diese nicht zu kleine ist und der Filter verstopft. Es eigenen sich beispielsweise einlagige Baumwolltücher.

Im nächsten Schritt werden 65 Gew.-% der Hafermasse nun 35 Gew.-% flüssiges Fett oder Öl zugesetzt. Dies bedeutet, dass zu 1.000 g der Hafermasse insgesamt 126 g flüssiges Fett oder Öl zugesetzt werden. Dieses Verhältnis von Hafermasse und Öl führen nach dem Trocknungsvorgang der Mischung aus Hafermasse und Öl und dem Vermischen des daraus resultierenden Pulvers mit Wasser in einem Verhältnis von 1: 10 zu einem pflanzlichen Getränk, welches einen Fettgehalt von 3,8 Gew.-% aufweist. Dieser Gehalt entspricht dem Fettgehalt handelsüblicher Vollmilch.

Die Mischung aus Hafermasse mit flüssigem Fett oder Öl wird auf einem Sprühturm auf ihre Trockenmasse reduziert. Die Sprühtrocknung erfolgt bei einer Temperatur im Bereich von 65°C - 68°C, besonders bevorzugt bei 67,5 °C. Dieser Temperaturbereich hat sich als besonders vorteilhaft erwiesen, da Stärke zwar aufgespalten, Eiweißverbindungen aber nicht aufgelöst werden.

Durch die Sprühtrocknung erfolgt eine Homogenisierung, wodurch sich vorteilhafterweise bei späterem Auflösen des Trockenpulvers in Wasser keine Fettablagerungen bilden. Das Anreichern der Hafermasse mit Fett und die anschließende Sprühtrocknung weisen diverse Vorteile auf: Zum einen wird durch das Fett als Geschmacksträger ein angenehmerer Geschmack des Surrogates erreicht. Zum anderen benötigen einige Weiterverarbeitungsmöglichkeiten von Milch bzw. ihren Alternativen das Vorhandensein von Fett.

Durch die Sprühtrocknung wird das Fett gekapselt, wodurch sich die Haltbarkeit des Pulvers deutlich verlängert. Es entsteht als Produkt der Sprühtrocknung gemäß dem vorliegenden Verfahren ein homogenes Pulver, welches sich gut auflösen lässt. Um insbesondere die Kaltlöslichkeit zu verbessern und so die Convenience zu erhöhen, kann das Pulver nach der Trocknung optional mit Lecithin versetzt bzw. übersprüht werden. Durch diesen natürlichen Emulgator wird Stickstoff zwischen den Partikeln gespeichert, wodurch ein gut lösliches Pulver entsteht, welches in gelöstem Zustand alle Qualitäten eines herkömmlichen Pflanzendrinks besitzt. Erfindungsgemäß wird Lecithin aus Sonnenblumen bevorzugt, da so Unverträglichkeiten mit Lecithin aus Soja, welches allergen Reststoff aufweisen kann vermieden werden. Im Übrigen wird die Verwendung von Lecithin aus Sonnenblumen als nachhaltiger angesehen.

Aus dem Stand der Technik sind lediglich komplexe Verfahren zur Herstellung rein pflanzlich basierter Trockenpulver durch einen langwierigen Homogenisierungsprozess bekannt, damit sich ein Öl oder Fett mit anderen Inhaltsstoffen verbindet. Das vorliegende Herstellungsverfahren basiert auf der überraschenden Erkenntnis, dass das Verfahren deutlich vereinfacht werden kann, wenn die konkrete Abfolge an Schritten, wie beansprucht, erfolgt.

Es war überraschend, dass eine Sprühtrocknung unter den angegebenen Bedingungen zu einem homogenen - und vor allen Dingen - gut lösbarem Pulver führt, bei dem die Bestandteile aus einem wässrigen Hafergemisch mit lediglich flüssigem Fett oder Öl miteinander verbunden sind. Dieses homogene Pulver weist im Vergleich zu einem Hafergetränkepulver, welches unter Walztrocknung der wässrigen Hafermischung mit flüssigem Fett oder Öl hergestellt wurde, signifikant bessere Lösungseigenschaften auf.

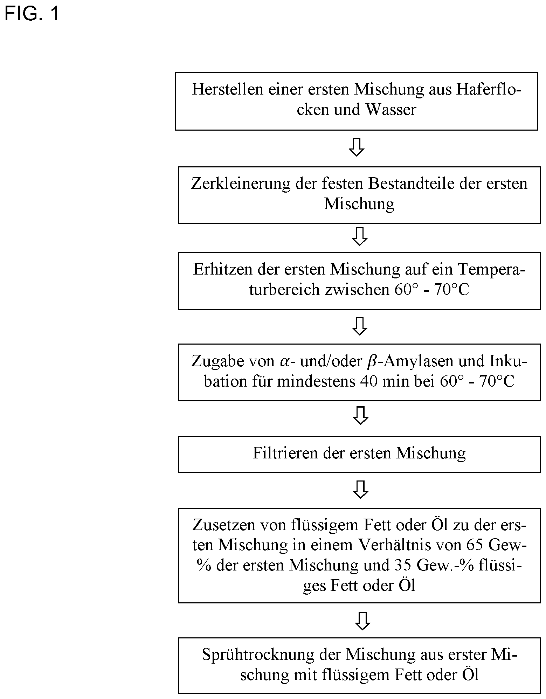

FIG. 1 zeigt schematisch den Ablauf des Verfahrens gemäß der vorliegenden Erfindung.

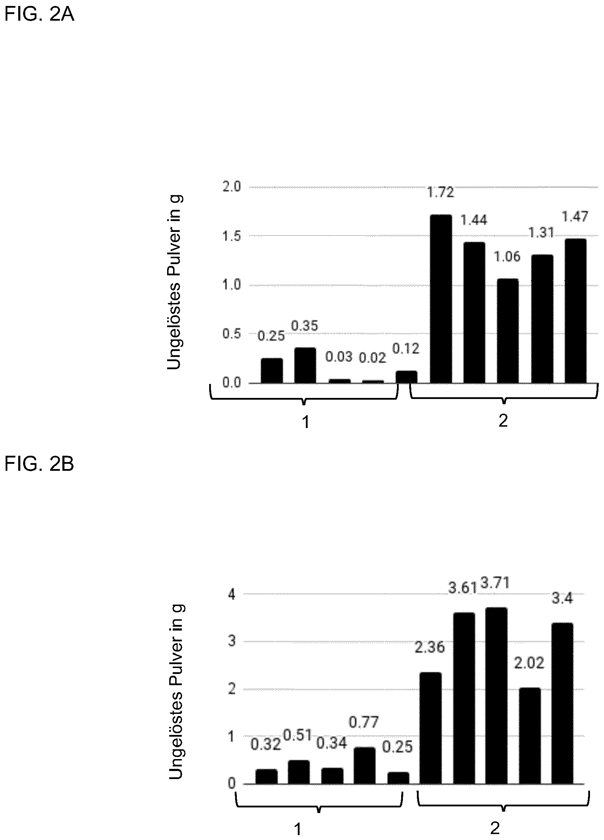

FIG. 2A und FIG. 2B zeigen die Ergebnisse von Lösungsversuchen. Dazu wurden jeweils 20 g Pulver in 200 ml Wasser gegeben. In FIG. 2A wurden die Mischungen für 10 Sekunden geschüttelt und FIG. 2B für 20 Sekunden. Anschließend wurde die Flüssigkeit entfernt und die Masse des jeweils ungelösten Pulvers bestimmt. Für beide Zeiten des Schüttelns wurde je fünf Versuche durchgeführt. Mit 1 ist ein Pulver gemäß der vorliegenden Erfindung bezeichnet und mit 2 ein Hafermilchgetränkepulver, bei dem das Gemisch aus wässriger Haferlösung mit flüssigem Fett oder Öl in einer Walze getrocknet wurde.

FIG. 2A und FIG. 2b zeigen deutlich die erheblich bessere Löslichkeit eines Trockenpulvers gemäß der vorliegenden Erfindung. Diese Ergebnisse sind insofern überraschend, als dass Sprühtrocknung bisher nur bei Kuhmilch zum Einsatz gekommen ist, also bei emulgiertem Fett in einer wässrigen Lösung vorliegt. Es ist als überraschend anzusehen, dass sich die Sprühtrocknung auch zur Herstellung eines homogenen und in Wasser deutlich besser lösbaren Pulvers verwenden lässt, wenn keine Emulgatoren oder andere Inhaltsstoffe vorhanden sind, sondern lediglich Wasser, Hafer und flüssiges Fett oder Öl als Bestandteile zugegeben wurden.

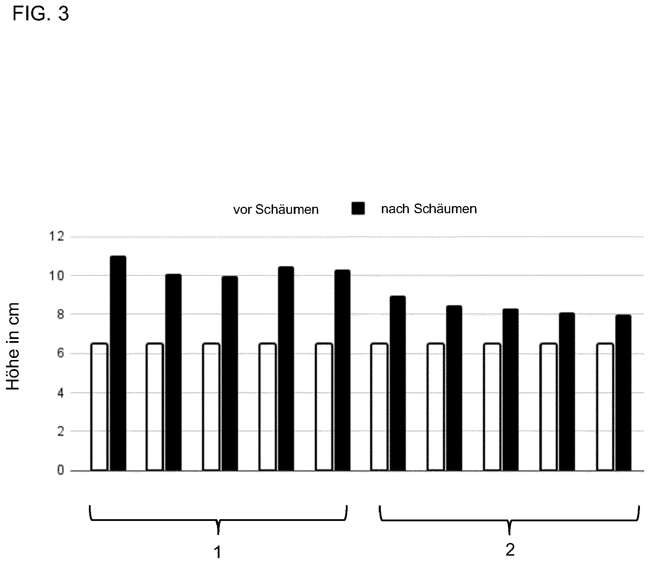

Neben der besseren Lösbarkeit führt das in Wasser gelöste Pulver gemäß der vorliegenden Erfindung auch dazu, dass sich das resultierende Getränk besser aufschäumen lässt. FIG. 3 zeigt die Ergebnisse einer Versuchsreihe mit je fünf Wiederholungen zum Aufschäumen eines Getränks. Es wurde einerseits ein Trockenpulver gemäß der vorliegenden Erfindung in Wasser in einem Verhältnis von 1 Teil Pulver auf 10 Teile Wasser gelöst (mit 1 bezeichnet). Weiterhin wurde ein Hafermilchgetränkepulver in Wasser in einem Verhältnis von 1 Teil Pulver auf 10 Teile Wasser gelöst, welches unter Verwendung von Walztrocknung hergestellt wurde (mit 2 bezeichnet). Die Höhe der Flüssigkeit im Becher des Milchaufschäumers wurde vor dem Aufschäumen gemessen. Die resultierenden Lösungen wurden in einem Milchaufschäumer mit einer auf deren Boden befindlichen Rührvorrichtung identisch auf ca. 65 °C erwärmt und durch die Rührvorrichtung für den gleichen Zeitraum aufgeschäumt. Anschließend wurde die Höhe der Flüssigkeit mit darauf befindlichem Schaum gemessen.

Aus FIG. 3 geht hervor, dass bei identischen Ausgangshöhen der Lösungen, das Getränk basierend auf dem Trockenpulver gemäß der vorliegenden Erfindung jeweils eine Höhe von zumindest 10 cm erreicht. Im Gegensatz dazu erreicht ein Getränk basierend auf einer Walzentrocknung maximal eine Höhe mit Schaum von 9 cm. Die Sprühtrocknung gemäß der vorliegenden Erfindung führt demnach überraschend dazu, dass sich ein rein pflanzliches Getränk hergestellt aus den Ausgangsstoffen Wasser, Hafer sowie flüssigem Öl oder Fett deutlich besser aufschäumen lässt. Dies ist von Vorteil, wenn eine Hafermilch, hergestellt aus einem Trockenpulver gemäß der vorliegenden Erfindung, zur Herstellung eines Milchkaffees verwendet wird

Die vorliegende Erfindung überwindet mithin ein bekanntes Problem bei der Herstellung eines rein pflanzlich basiertem Getränkepulvers. Neben einer verbesserten Löslichkeit des Trockenpulvers hat auch die Lösung selbst vorteilhafte Eigenschaften, wie z. B. eine verbesserte Aufschäumbarkeit.

Es ist vorgesehen das Trockenpulver, welches aus der Sprühtrocknung resultiert in 100 g Portion abzugeben, welches dann mit 1 l Wasser versetzt wird, um ein Getränk auf pflanzlicher Basis zu erhalten, was den Fettgehalt von Vollmilch aufweist.

## Patentansprüche

1. Ein Herstellungsverfahren für ein wasserlösliches Trockenpulver, umfassend die Schritte;
a. Herstellen einer ersten Mischung durch Mischen von Wasser mit Hafer in einem Verhältnis von 50 - 65 Gew-% Wasser mit 35 - 50 Gew.-% Hafer zu dann 100 Gew.-% der ersten Mischung;
b. Zerkleinern fester Bestandteile in der ersten Mischung;
c. Erhitzen der ersten Mischung auf ein Temperaturbereich zwischen 60° - 70°C;
d. Zugabe von *α*- und/oder *β*-Amylasen und Inkubation für mindestens 40 min bei 60° - 70°C;
e. Filtrieren der ersten Mischung;
f. Zusetzen von flüssigem Fett oder Öl zu der ersten Mischung in einem Verhältnis von 65 Gew.-% der ersten Mischung und 35 Gew.-% flüssiges Fett oder Öl zum Erhalt von 100 Gew.-% einer zweiten Mischung; und
g. Sprühtrocknung der zweiten Mischung zum Erhalt eines homogenen Pulvers.

2. Das Verfahren nach Anspruch 1, wobei die Sprühtrocknung in einem Temperaturbereich von 65°C bis 68°C erfolgt.

3. Das Verfahren nach Anspruch 1 oder 2, wobei die Sprühtrocknung bei 67,5°C erfolgt.

4. Das Verfahren nach einem der Ansprüche 1 bis 3, wobei die Sprühtrocknung in einem Sprühturm erfolgt.

5. Das Verfahren nach einem der Ansprüche 1 bis 4, wobei das Pulver nach der Sprühtrocknung mit Lecithin übersprüht wird.

6. Das Verfahren nach einem der Ansprüche 1 bis 5, wobei vor der Sprühtrocknung Phosphate zugesetzt werden.

7. Das Verfahren nach eine der Ansprüche 1 bis 6, wobei vor der Sprühtrocknung Vitamine zugesetzt werden.

8. Eine Verwendung eines Trockenpulvers, welches nach einem der Ansprüche 1 bis 7 hergestellt wurde zur Herstellung eines Getränks umfassend den Schritt des Mischens des Trockenpulvers mit Wasser.

9. Die Verwendung nach Anspruch 8, wobei je 10 g Trockenpulver mit 100 ml Wasser gemischt werden.

10. Ein Getränk auf rein pflanzlicher Basis mit einem Fettgehalt von 3 - 4 Gew.-%, hergestellt durch die Mischung eines Trockenpulvers aus einem Verfahren nach einem der Ansprüche 1 bis 7 mit Wasser.
